# EUROPÄISCHE PATENTSCHRIFT

(11) **EP 1 836 381 B1**
(45) Veröffentlichungstag und Bekanntmachung des Hinweises auf die Patenterteilung: **11.02.2009**
(21) Anmeldenummer: 05818415.1
(22) Anmeldetag: 10.12.2005
(51) Int. Cl.: F02D 13/04, F02D 9/06, F01L 13/06, F02D 21/08, F02B 37/24

(54) **Verfahren zum Motorbremsbetrieb einer Brennkraftmaschine mit einem den Zylindern zugeordneten Gasdruckbehälter.**
Method for braking operation of an internal combustion engine provided with a gas pressure container associated with the cylinders.
Procédé de fonctionnement en mode frein moteur d'un moteur à combustion interne comprenant un reservoir de pression gazeuse associé aux cylindres.

(30) Priorität: 14.01.2005 DE 102005001757
(43) Veröffentlichungstag der Anmeldung: 26.09.2007
(73) Patentinhaber: Daimler AG, 70327 Stuttgart (DE)
(72) Erfinder: SCHMID, Wolfram, 72622 Nürtingen (DE); SUMSER, Siegfried, 70327 Stuttgart (DE)
(86) Internationale Anmeldenummer: PCT/EP2005/013268
(87) Internationale Veröffentlichungsnummer: WO 2006/074776

(56) Entgegenhaltungen:
- EP-A- 0 531 277
- WO-A-20/04074648
- DE-A1- 2 431 828
- DE-A1- 10 144 471
- US-A1- 2001 002 379
- PATENT ABSTRACTS OF JAPAN Bd. 009, Nr. 114 (M-380), 18. Mai 1985 (1985-05-18) & JP 60 001333 A (MITSUBISHI JIDOSHA KOGYO KK), 7. Januar 1985 (1985-01-07)

## Beschreibung

Die Erfindung bezieht auf ein Verfahren zum Motorbremsbetrieb einer Brennkraftmaschine mit einem den Zylindern zugeordneten Gasdruckbehälter nach dem Oberbegriff des Anspruches 1.

In der Druckschrift DE 101 44 471 A1 wird eine mehrzylindrige Hubkolben-Brennkraftmaschine offenbart, welche einen rohrförmigen Druckbehälter (Brems-Rail) aufweist, der über jeweils ein Bremsventil mit jedem Zylinder der Brennkraftmaschine verbunden ist. Im Bremsbetrieb der Brennkraftmaschine werden die Bremsventile pro Arbeitszyklus mehrmals geöffnet und geschlossen, so dass hochverdichtete Luft aus dem Zylinder in den Druckbehälter austritt und Bremsleistung entsteht. Nach dem Schließen des Einlassventils am Zylinder wird das jeweilige Bremsventil nochmals kurz geöffnet, so dass die verdichtete Verbrennungsluft aus dem Druckbehälter in den Brennraum des Zylinders zurückströmt und in der Folge der Kolben im Zylinder Kompressionsarbeit gegen die verdichtete Luft aufbringen muss. Hierdurch wird die Bremsleistung des Motors weiter erhöht.

Der Gasdruckbehälter ist außerdem über eine Abströmleitung mit einem darin angeordneten, einstellbaren Abströmventil mit dem Abgasstrang der Brennkraftmaschine verbunden, so dass bei geöffnetem Abströmventil der Gasinhalt aus dem Gasdruckbehälter in den Abgasstrang abfließen kann. Hierdurch werden unzulässig hohe Drücke vermieden.

Die gattungsbildende Patentschrift US 6,328,003 B1 offenbart eine Hubkolben-Brennkraftmaschine, welche einen Gasdruckbehälter aufweist, der über jeweils ein Bremsventil mit jedem Zylinder der Brennkraftmaschine verbunden ist. Im Motorbremsbetrieb der Brennkraftmaschine können die Bremsventile geöffnet werden, so dass die Zylinder mit dem Gasdruckbehälter verbunden werden. Der Gasdruckbehälter wird im Motorbremsbetrieb zusätzlich über eine Abströmleitung mit einem darin angeordneten, einstellbaren Abströmventil mit dem Abgasstrang der Brennkraftmaschine verbunden. Damit herrscht im Gasdruckbehälter der gleiche Abgasgegendruck wie im Angasstrang, wodurch die Kolben in den Zylindern gegen den Abgasgegendruck abgebremst werden. Der Gasdruckbehälter ist außerdem über eine Rezirkulationsleitung mit einem darin angeordneten, einstellbaren Sperrventil mit dem Ansaugtrakt der Brennkraftmaschine verbunden, so dass bei geöffnetem Sperrventil die Verbrennungsluft aus dem Gasdruckbehälter in den Ansaugtrakt strömen kann. Im Motorbremsbetrieb ist das Sperrventil in seiner Geschlossenstellung, so dass der Gasdruckbehälter in keiner Strömungsverbindung mit dem Ansaugtrakt steht.

Der Erfindung liegt das Problem zugrunde, mit einfachen Maßnahmen die Motorbremsleistung einer Brennkraftmaschine genauer zu regulieren, deren Zylinder über jeweils ein einstellbares Bremsventil mit einem gemeinsamen Gasdruckbehälter verbunden sind.

Im erfindungsgemäßen Motorbremsbetrieb gemäß Anspruch 1 werden die Bremsventile an den Zylindern und außerdem das Sperrventil in der Rezirkulationsleitung geöffnet, so dass die Bremsventile in an sich bekannter Weise als Konstantdrossel wirken. Aufgrund des geöffneten Sperrventils wird eine Rezirkulation des in den Gasdruckbehälter abgeblasenen Zylinderinhalts zurück in den Ansaugtrakt eingestellt. Diese Rezirkulation kann jedoch, gemäß einer weiteren zweckmäßigen Ausführung, durch eine geregelte Einstellung der Position des Abströmventils in der Abströmleitung zwischen Gasdruckbehälter und Abgasstrang eingestellt werden. Über den freigegebenen Querschnitt im Abströmventil werden der Druck im Gasdruckbehälter sowie die Rezirkulationsrate über die Rezirkulationsleitung eingestellt. Wird die Rezirkulationsrate durch weites Öffnen des Abströmventils reduziert, lässt sich der Motordurchsatz steigern und die Gastemperatur in den Zylindern bei gleichen Motorbremsleistungen absenken. Die Steigerung der Luftmenge lässt sich bei Nenndrehzahl im Motorbremsbetrieb bis zur maximal zulässigen Drehzahl eines der Brennkraftmaschine zugeordneten Abgasturboladers durchführen.

Die Einstellung der Motorbremsleistung kann aber auch lediglich über das Sperrventil in der Rezirkulationsleitung erfolgen. In diesem Fall bleibt das Abströmventil zweckmäßig komplett oder zumindest weitgehend geschlossen.

Durch ein Zusammenwirken des Abströmventils einerseits und des Sperrventils in der Rezirkulationsleitung andererseits kann die Motorbremsleistung eingestellt werden. Hierdurch kann insbesondere auch eine Tempomatfunktion des Fahrzeugs realisiert werden, bei der im Motorbremsbetrieb in Abhängigkeit von äußeren Bedingungen, insbesondere vom aktuellen Gefälle, eine konstante Fahrzeuggeschwindigkeit eingestellt wird.

In einer weiteren bevorzugten Ausführung ist die Brennkraftmaschine mit einem Abgasturbolader mit einem Verdichter im Ansaugtrakt und einer Abgasturbine im Abgasstrang ausgestattet, wobei die Abgasturbine zweckmäßig eine variable Turbinengeometrie zur veränderlichen Einstellung des wirksamen Turbineneintrittsquerschnittes besitzt. Hierdurch ergeben sich zusätzliche Einstellmöglichkeiten, da die Position der variablen Turbinengeometrie einen weiteren Freiheitsgrad darstellt, über den der Abgasgegendruck und damit beispielsweise die Turbinenleistung sowie die Motorbremsleistung beeinflusst werden kann. So kann die Tempomatfunktion auch über eine Einstellung der variablen Turbinengeometrie realisiert werden.

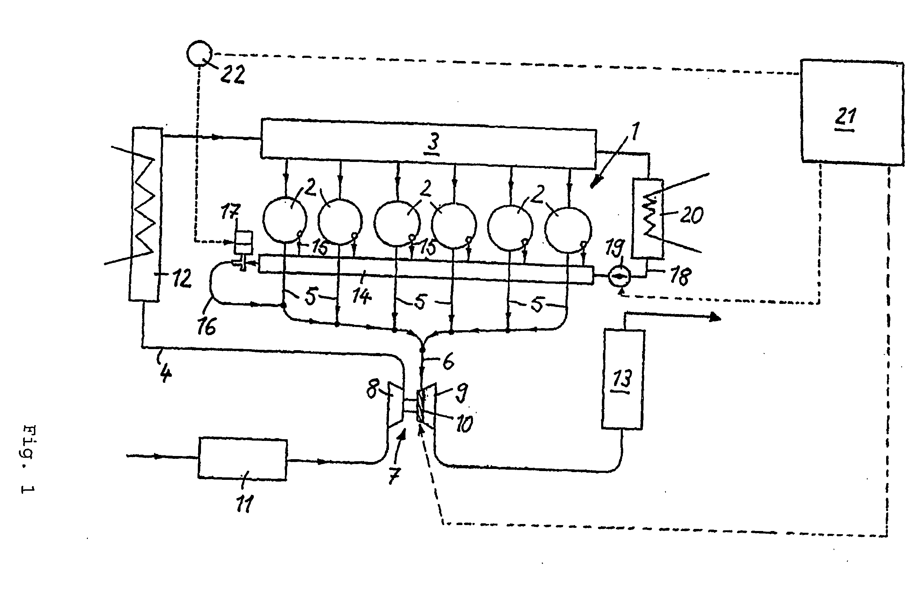

Weitere Vorteile und zweckmäßige Ausführungen sind den weiteren Ansprüchen, der Figurenbeschreibung und der Zeichnung zu entnehmen, in der ein bevorzugtes Ausführungsbeispiel einer aufgeladenen Brennkraftmaschine dargestellt ist, deren Zylinder mit einem gemeinsamen Gasdruckbehälter verbunden sind.

Die in der Figur dargestellte mehrzylindrige Hubkolben-Brennkraftmaschine 1 - ein Ottomotor oder ein Dieselmotor - umfasst eine Mehrzahl von Zylindern 2, denen über einen gemeinsamen Luftsammler 3 Verbrennungsluft zuzuführen ist und deren Abgase über jeweils einen Abgaskrümmer 5 in einen Abgasstrang 6 geleitet werden. Der Luftsammler 3 ist den Zylindern 2 der Brennkraftmaschine 1 unmittelbar vorgelagert und befindet sich im Ansaugtrakt 4 der Brennkraftmaschine.

Der Brennkraftmaschine 1 ist ein Abgasturbolader 7 zugeordnet, der einen Verdichter 8 im Ansaugtrakt 4 und eine Abgasturbine 9 im Abgasstrang 6 umfasst. Das Verdichterrad des Verdichters 8 und das Turbinenrad der Abgasturbine 9 sind drehfest miteinander verbunden. Das Abgas der Brennkraftmaschine 1 treibt das Turbinenrad an, deren Drehbewegung aufgrund der drehfesten Kopplung auf das Verdichterrad übertragen wird, woraufhin der Verdichter 8 Verbrennungsluft aus der Umgebung ansaugt und auf einen erhöhten Ladedruck komprimiert. Die Abgasturbine 9 ist mit variabler Turbinengeometrie 10 ausgestattet, über die der wirksame Turbineneintrittsquerschnitt zwischen einer minimierenden Stauposition und einer maximalen Öffnungsposition zu verstellen ist. Die variable Turbinengeometrie ist beispielsweise als axial verstellbares Leitgitter oder als feststehendes Leitgitter mit verstellbaren Leitschaufeln ausgebildet.

Die Verbrennungsluft wird im Ansaugtrakt 4 zunächst in einem Luftfilter 11 gereinigt, der stromauf des Verdichters 8 angeordnet ist. Stromab des Verdichters 8 befindet sich im Ansaugtrakt 4 ein Ladeluftkühler 12, in welchem die vom Verdichter 8 vorverdichtete Luft zunächst gekühlt wird. Nach der Kühlung im Ladeluftkühler 12 wird die Verbrennungsluft in den gemeinsamen Luftsammler 3 eingeleitet, von dem ausgehend die Verbrennungsluft unter Ladedruck den Zylindern 2 der Brennkraftmaschine zugeführt wird.

Abgasseitig werden die in der Brennkraftmaschine produzierten Abgase über den Abgasstrang 6 zunächst in die Abgasturbine 9 geleitet, dort entspannt und im weiteren Verlauf stromab der Abgasturbine einer Abgasnachbehandlungseinrichtung 13 zugeführt, in der eine Reinigung der Abgase durchgeführt wird. Die Abgasnachbehandlungseinrichtung 13 umfasst insbesondere einen Katalysator und gegebenenfalls einen Abgasfilter.

Die Brennkraftmaschine 1 ist außerdem mit einem Gasdruckbehälter 14 ausgestattet, bei dem es sich um eine gemeinsame Gashochdruckschiene (Rail) für sämtliche Zylinder 2 der Brennkraftmaschine handelt. Jeder Zylinder 2 ist über jeweils ein Bremsventil 15 mit dem Gasdruckbehälter 14 verbunden. In Öffnungsposition der Bremsventile 15 kommuniziert der Zylinderinhalt des jeweiligen Zylinders 2 mit dem Gasdruckbehälter, in Sperrposition ist ein Gasaustausch zwischen den Zylindern und dem Gasdruckbehälter 14 unterbunden. Die Bremsventile 15 an jedem Zylinder 2 sind insbesondere zusätzlich zu Ein- und Auslassventilen am betreffenden Zylinder vorgesehen.

Der Gasdruckbehälter 14 ist über eine Abströmleitung 16, in welcher sich ein einstellbares Abströmventil 17 befindet, mit dem Abgasstrang 6 der Brennkraftmaschine verbunden. Bei geöffnetem Abströmventil 17 steht der Gasinhalt im Gasdruckbehälter 14 in Strömungsverbindung mit dem Abgasstrang 6.

Der Gasdruckbehälter 14 ist außerdem über eine Rezirkulationsleitung 18 mit dem Luftsammler 3 verbunden. In der Rezirkulationsleitung 18 befindet sich ein einstellbares Sperrventil 19 sowie ein Kühler 20. In geöffneter Position des Sperrventiles 19 steht der Inhalt des Gasdruckbehälters 14 in Strömungsverbindung mit dem Luftsammler 3, bei gesperrtem Ventil ist dagegen die Strömungsverbindung unterbrochen.

Das Sperrventil 19 und zweckmäßigerweise auch das Abströmventil 17 sind jeweils druckpulsationsstabil ausgebildet. Dies kann beispielsweise durch eine Realisierung als Drehschieberventil erreicht werden.

Der Brennkraftmaschine 1 ist außerdem eine Regel- und Steuereinheit 21 zugeordnet, welche in Abhängigkeit von Zustands- und Betriebsgrößen der Brennkraftmaschine 1 bzw. der der Brennkraftmaschine zugeordneten Aggregate Stellsignale zur Einstellung und Regelung sämtlicher Stelleinheiten in der Brennkraftmaschine erzeugt. Einzustellen sind insbesondere die variable Turbinengeometrie 10, das Abströmventil 17 in der Abströmleitung 16 zwischen Gasdruckbehälter 14 und Abgasstrang 6, das Sperrventil 19 in der Rezirkulationsleitung 18 zwischen Gasdruckbehälter 14 und Luftsammler 3.

Die Regel- und Steuereinheit 21 erfasst unter anderem auch den Zustand eines Bremsschalters 22, welcher vom Fahrer zur manuellen Einstellung des Abströmventils 17 und damit zur Einstellung des Drucks im Gasdruckbehälter betätigt werden kann. Über die Regel- und Steuereinheit 21 ist aber insbesondere auch eine selbsttätige Einstellung des Abströmventils 17 ohne Fahrereingriff möglich.

Der mit den Zylindern 2 kommunizierende Gasdruckbehälter 14 ermöglicht verschiedene Betriebsweisen der Brennkraftmaschine. Es kann insbesondere durch eine Einstellung der dem Gasdruckbehälter 14 zugeordneten Ventile 15, 17 und 19 die Betriebsweise Motorbremsbetrieb beeinflusst werden.

In der Betriebsweise Motorbremsbetrieb kann zwischen einer Motorbremse im unteren Motordrehzahlbereich und einer Motorbremse im mittleren sowie oberen Motordrehzahlbereich unterschieden werden. Im unteren Motordrehzahlbereich ist der Aufladegrad, welcher über die Abgasturbine 7 durch eine entsprechende Stauposition der variablen Turbinengeometrie 10 zu erreichen ist, noch relativ niedrig, was mit einem verhältnismäßig geringen Abgasgegendruck im Abgasstrang 6 stromauf der Abgasturbine 9 einhergeht. Der Motorbremsbetrieb wird in dieser Phase dadurch hergestellt, dass die Bremsventile 15 zwischen den Zylindern 2 und dem Gasdruckbehälter 14 taktweise geöffnet und geschlossen werden. Zweckmäßigerweise erfolgen pro Motorumdrehung zwei kurze Öffnungsphasen jedes Bremsventils, wobei eine erste Öffnungsphase der Bremsventile nahe des oberen Totpunkts des Kompressionstaktes erfolgt, woraufhin im Zylinder komprimierte Verbrennungsluft über die geöffneten Bremsventile 15 in den Gasdruckbehälter 14 ausströmen kann. Die zweite Öffnungsphase erfolgt im gleichen Arbeitszyklus kurz nach dem Schließen der Einlassventile an den Zylindern, woraufhin verdichtete Luft aus dem Gasdruckbehälter 14 aufgrund eines Druckgefälles in die Brennräume der Zylinder 2 zurückströmt. Die Brennkraftmaschine muss dann gegen den erhöhten Zylinderinnendruck Kompressionsarbeit verrichten, was die Bremsleistung steigert.

Im mittleren und oberen Motordrehzahlbereich ist der Aufladegrad im Abgasturbolader stark angestiegen, der Abgasgegendruck befindet sich auf einem entsprechend hohen Niveau. Die Taktung der Bremsventile 15 wird zweckmäßigerweise weitgehend eingestellt, die Bremsventile 15 werden im Prinzip wie an sich bekannte Konstantdrosseln konstant offen gehalten. Auch das Abströmventil 17 ist mehr oder weniger weit geöffnet, so dass im Gasdruckbehälter 14 der gleiche Abgasgegendruck herrscht wie im Abgasstrang 6 stromauf der Abgasturbine 9. In der Kompressionsphase müssen die Kolben in den Zylindern 2 Kompressionsarbeit gegen diesen erhöhten Abgasgegendruck verrichten. Zugleich strömt in der Abgasturbine 9 das unter hohem Druck stehende Abgas durch die verbleibenden freien Strömungsquerschnitte in der variablen Turbinengeometrie 10 auf das Turbinenrad und versetzt diesem einen antreibenden Impuls, woraufhin verdichterseitig Verbrennungsluft angesaugt und verdichtet wird und diese verdichtete Luft den Zylindern zugeführt wird. Hierdurch wird das Druckniveau auch auf der Luftseite erhöht.

Eine Regulierung des Abgasgegendruckniveaus erfolgt durch Einstellung der Position der variablen Turbinengeometrie 10 in der Abgasturbine 9. Die Einstellung des Druckniveaus im Gasdruckbehälter 14 kann durch die aktuelle Position des Abströmventils 17 in der Abströmleitung 16 beeinflusst werden. Bei voll geöffneter Position des Abströmventils 17 findet ein Druckausgleich zwischen dem Gasdruck im Gasdruckbehälter 14 und dem Abgasgegendruck im Abgasstrang 6 stromauf der Abgasturbine 9 statt. Bei geschlossenem oder nur teilgeöffnetem Abströmventil 17 kann auch ein Druckgefälle zwischen Gasdruckbehälter 14 und Abgasstrang 6 eingestellt werden.

Eine weitere Einstellmöglichkeit besteht über die Regulierung des Sperrventils 19 in der Rezirkulationsleitung 18. Bei geöffnetem Sperrventil 19 kann die Luft aus dem Gasdruckbehälter 14 - die gegebenenfalls mit Abgas vermischt ist - über die Rezirkulationsleitung 18 in den Luftsammler 3 überströmen, wodurch das Druckniveau auf der Luftseite der Zylinder erhöht werden kann. Das Abströmventil 17 bleibt in dieser Phase entweder komplett geschlossen oder ist nur zum Teil geöffnet. Die Bremsventile 15 befinden sich vorteilhaft in dieser Motorbremsbetriebsphase konstant in Offenstellung.

Die Regulierung der Motorbremsleistung kann durch Verstellung des Abströmventils 17 und/oder des Sperrventils 19 in der Rezirkulationsleitung 18 durchgeführt werden. Beispielsweise kann eine Tempomatfunktion unter Einsatz der Motorbremse realisiert werden, indem die Motorbremsleistung durch eine Einstellung der genannten Ventile in der Weise auf die aktuelle Situation eingestellt wird, dass das Fahrzeug eine konstante Fahrzeuggeschwindigkeit einhält. Eine zusätzliche Einflussmöglichkeit liegt in der Position der variablen Turbinengeometrie 10. Durch die Einstellung sowohl des Abströmventils 17, des Sperrventils 19 und der variablen Turbinengeometrie 10 können zusätzliche Randbedingungen erfüllt werden, beispielsweise kann die mechanische und thermische Beanspruchung von Bauteilen auch bei hohen Motorbremsleistungen innerhalb zulässiger Grenzwerte gehalten werden.

## Patentansprüche

1. Verfahren zum Motorbremsbetrieb einer Brennkraftmaschine, bei dem über Bremsventille (15) an den Zylindern (2) der Brennkraftmaschine die Zylinder (2) mit einem Gasdruckbehälter (14) verbunden werden und ein Abströmventil (17) in einer Abströmleitung (16) wischen dem Gasdruckbehälter (14) und einem Abgasstrang (6) der Brennkraftmaschine geöffnet wird,
**dadurch gekennzeichnet,**
**dass** ein Sperrventil (19) in einer Rezirkulationsleitung (18) zwischen dem Gasdruckbehälter (14) und einem Ansaugtrakt (4) geöffnet wird.

2. Verfahren nach Anspruch 2,
**dadurch gekennzeichnet,**
**dass** das Abströmventil (17) in der Abströmleitung (16) zwischen Gasdruckbehälter (14) und Abgasstrang (6) in Richtung Schließstellung versetzt wird.

3. Verfahren nach Anspruch 1 oder 2,
**dadurch gekennzeichnet,**
**dass** zur Realisierung einer Tempomatfunktion die Position des Abströmventils (17) eingeregelt wird.

4. Verfahren einem der Ansprüche 1 bis 3,
**dadurch gekennzeichnet,**
**dass** zur Realisierung einer Tempomatfunktion eine variable Turbinengeometrie (10) einer Abgasturbine (9) eingeregelt wird.

## Claims

1. Method for the engine braking operation of an internal combustion engine, wherein the cylinders (2) are connected to a gas pressure tank (14) via brake valves (15) fitted to the cylinders (2) of the internal combustion engine, and wherein a discharge valve (17) is opened in a discharge line (16) between the gas pressure tank (14) and an exhaust train (6) of the internal combustion engine,
**characterised in that**
a shut-off valve (19) is opened in a recirculation line (18) between the gas pressure tank (14) and an intake train (4).

2. Method according to claim 1,
**characterised in that**
the discharge valve (17) in the discharge line (16) between the gas pressure tank (14) and the exhaust train (6) is displaced towards the closed position.

3. Method according to claim 1 or 2
**characterised in that**
the position of the discharge valve (17) is adjusted to implement a cruise control function.

4. Method according to any of claims 1 to 3,
**characterised in that**
a variable turbine geometry (10) of a turbocharger turbine (9) is adjusted to implement a cruise control function.

## Revendications

1. Procédé de fonctionnement en mode frein moteur d'un moteur à combustion interne, selon lequel, par l'intermédiaire de vannes de freinage (15) au niveau des cylindres (2) du moteur à combustion interne, on relie les cylindres (2) à un réservoir de pression de gaz (14), et on ouvre une vanne de sortie d'écoulement (17) dans une conduite de sortie d'écoulement (16) entre le réservoir de pression de gaz (14) et une ligne de gaz d'échappement (6) du moteur à combustion interne,
**caractérisé en ce que** l'on ouvre une vanne d'isolement (19) dans une conduite de recirculation (18) entre le réservoir de pression de gaz (14) et un tronçon de circuit d'aspiration (4).

2. Procédé selon la revendication 1,
**caractérisé en ce que** la vanne de sortie d'écoulement (17) dans la conduite de sortie d'écoulement (16) entre le réservoir de pression de gaz (14) et la ligne de gaz d'échappement (6) est déplacée en direction de la position de fermeture.

3. Procédé selon la revendication 1 ou 2,
**caractérisé en ce que** pour réaliser une fonction de régulateur de vitesse automatique, on procède à la régulation de la position de la vanne de sortie d'écoulement (17).

4. Procédé selon l'une des revendications 1 à 3,
**caractérisé en ce que** pour réaliser une fonction de régulateur de vitesse automatique, on procède à la régulation d'une géométrie de turbine variable (10) d'une turbine de gaz d'échappement (9).
